# EUROPÄISCHE PATENTSCHRIFT

(11) **EP 3 481 189 B1**
(45) Veröffentlichungstag und Bekanntmachung des Hinweises auf die Patenterteilung: **09.09.2026**
(21) Anmeldenummer: 17740652.7
(22) Anmeldetag: 04.07.2017
(51) Int. Cl.: A01M 7/00, B05B 9/08

(54) **SPRÜHGERÄT MIT AUSWECHSELBARER KARTUSCHE**
SPRAYER WITH AN EXCHANGEABLE CARTRIDGE
PULVERISATEUR DOTE DE CARTOUCHE ECHANGEABLE

(30) Priorität: 11.07.2016 EP 16178764; 11.07.2016 EP 16178766; 11.07.2016 US 201662360548 P; 11.07.2016 US 201662360555 P
(43) Veröffentlichungstag der Anmeldung: 15.05.2019
(73) Patentinhaber: Bayer CropScience Aktiengesellschaft, 40789 Monheim am Rhein (DE)
(72) Erfinder: GUTSMANN, Volker, 40764 Langenfeld (DE)
(74) Vertreter: BIP Patents
(86) Internationale Anmeldenummer: PCT/EP2017/066612
(87) Internationale Veröffentlichungsnummer: WO 2018/011012

(56) Entgegenhaltungen:
- EP-B1- 2 790 497
- WO-A2-2013/030117
- WO-A2-2013/165684
- US-A- 4 790 454
- US-A1- 2013 193 232
- US-B2- 7 295 898
- UNKNOWN: "Dosierung und Flüssigkeitsverteilung im Pflanzenschutz Metering and liquid distribution for", 1 May 2002 (2002-05-01), XP055335683, Retrieved from the Internet <URL:http://www.mesto.de/fileadmin/user_upload/pdf/dosiertabelle.pdf> [retrieved on 20170116]

## Beschreibung

Die vorliegende Erfindung betrifft die Applikation von flüssigen Wirkstoffen mit Hilfe eines tragbaren Sprühgeräts. Gegenstand der vorliegenden Erfindung ist ein System umfassend ein tragbares Sprühgerät und eine auswechselbare Kartusche, die ein Wirkstoffkonzentrat enthält. Gegenstand der vorliegenden Erfindung ist ferner ein Verfahren zur Applikation einer flüssigen Wirkstoffformulierung. Ein weiterer Gegenstand der vorliegenden Erfindung ist eine auswechselbare Kartusche, die über eine Speichereinheit verfügt, in der Informationen über einen einzustellenden Verdünnungsgrad für das in der Kartusche enthaltende Wirkstoffkonzentrat abgelegt sind. Ein weiterer Gegenstand der vorliegenden Erfindung ist ein Sprühgerät mit einer Kontrolleinheit, die eine Speichereinheit einer an das Sprühgerät angeschlossenen Kartusche auslesen und auf Basis der ausgelesenen Informationen einen Verdünnungsgrad für das in der Kartusche enthaltende Wirkstoffkonzentrat einstellen kann.

Tragbare Sprühgeräte zum Applizieren von Wirkstoffen wie Pestiziden, Insektiziden, Herbiziden und Fungiziden sind bekannt (WO2013/165684A2, US4790454A, DE102013109785A1, US2006/0249223A1, US2006/0102245A1, US2006/0261181A1, US2005/0006400A1).

Weit verbreitet sind dabei Sprühgeräte, die als Kompressionssprüher bezeichnet werden. Sie umfassen einen Tank zur Aufnahme der zu versprühenden Flüssigkeit. Eine meist von Hand zu betätigende Luftdruckpumpe, die einen Teil des Tanks bildet, enthält einen üblichen Kolbenstangenaufbau und einen Betätigungshandgriff dafür. Diese Luftdruckpumpe wird verwendet, um über der zu versprühenden Flüssigkeit einen Luftdruck zu erzeugen. Das Unterdrucksetzen des Tanks wird dadurch bewirkt, dass die Bedienperson die Pumpe periodisch betätigt bis ein gewünschter Tankdruck erreicht ist. Die Sprühflüssigkeit tritt aufgrund des Luftdrucks, der auf sie ausgeübt wird, durch ein in die Flüssigkeit im Tank eintauchendes Rohr aus und strömt dann durch einen Schlauch, ein Sprühstrahlventil am äußeren Ende des Schlauches, ein Verlängerungsrohr und schließlich durch eine Sprühdüse hindurch zu dem ausgewählten Zielbereich.

Pestizide, Insektizide, Herbizide und Fungizide werden heute zunehmend in Form von Konzentraten auf den Markt gebracht. Konzentrate haben den Vorteil geringerer Transportkosten. Der Anwender muss den Wirkstoff vor Verwendung verdünnen. Die Verdünnungsvorschiften finden sich gewöhnlich auf der Verpackung oder einem Beipackzettel.

Eine vom Anwender vorgenommene Verdünnung ist jedoch aus folgenden Gründen nachteilig:
Der Anwender kann in unerwünschten Kontakt mit dem Wirkstoff kommen. Es ist denkbar, dass sich der Anwender bei der Berechnung der Mengen an Konzentrat und Verdünnungsmittel vertut. Eine hohe Viskosität des Konzentrats kann zu einer ungenauen volumetrischen Abmessung der erforderlichen Menge führen.

Eine ungenaue Dosierung von Wirkstoffen kann eine Reihe von ungewollten Folgen haben: Die Behandlung des besprühten Objekts kann wirkungslos sein oder es kann zu einer Überdosierung kommen. Es ist denkbar, dass behördliche Vorschiften über abgegebene Mengen nicht eingehalten werden. Es ist denkbar, dass Fehler in der Bestandsüberwachung auftreten, da die abgegebenen Mengen falsch berechnet wurden. Ein weiterer Nachteil des oben beschriebenen Sprühgeräts besteht darin, dass der Tank bei Verwendung eines anderen Wirkstoffs zunächst gereinigt werden muss. Gegebenenfalls muss die Reinigungsflüssigkeit entsorgt werden.

Die US7295898B2 und die EP2790497B1 beschreiben zur Vermeidung der genannten Nachteile Kartuschen bzw. Behälter zur Aufnahme eines Wirkstoffkonzentrats. Diese Behälter weisen eine elektronische Speichereinheit auf, in der Informationen zur Zusammensetzung des Konzentrats sowie der in der Kartusche enthaltenen Menge an Konzentrat gespeichert sind.

Ausgehend vom beschriebenen Stand der Technik bestand die Aufgabe darin, eine Vorrichtung zur Applikation von Wirkstoffen bereitzustellen, die einfach in der Handhabung ist, bei der keine manuelle Verdünnung von Konzentraten erforderlich ist, die eine genau definierbare Menge an Wirkstoff abgibt, die bequem zu transportieren und vom Anwender zu tragen und zu transportieren ist, bei der keine aufwändige Reinigung erforderlich ist, und die vielseitig eingesetzt werden kann.

Erfindungsgemäß wird diese Aufgabe durch die Gegenstände der unabhängigen Ansprüche 1, 5, 8 und 11 erfüllt. Bevorzugte Ausführungsformen finden sich in den abhängigen Ansprüchen sowie in der vorliegenden Beschreibung.

Ein erster Gegenstand der vorliegenden Erfindung ist eine Kartusche enthaltend ein Konzentrat eines Pestizids, Insektizids, Herbizids oder Fungizids, wobei die Kartusche Mittel zum reversiblen Anschluss der Kartusche an ein Sprühgerät umfasst, dadurch gekennzeichnet, dass die Kartusche über eine elektronische Speichereinheit verfügt, und wobei in der Speichereinheit Informationen über einen einzustellenden Verdünnungsgrad des Konzentrats gespeichert sind.

Ein weiterer Gegenstand der vorliegenden Erfindung ist ein Sprühgerät, umfassend
- einen Behälter zur Aufnahme eines Verdünnungsmittels,
- einen Auslass,
- Mittel zur Förderung des Verdünnungsmittels in Richtung Auslass,
- Mittel zum reversiblen Anschluss einer auswechselbaren Kartusche enthaltend ein Konzentrat eines Pestizids, Insektizids, Herbizids oder Fungizids an das Sprühgerät,
- Mittel zur Förderung des Konzentrats in Richtung Auslass, und
- eine Kontrolleinheit
dadurch gekennzeichnet, dass die Kontrolleinheit über Mittel zum Auslesen eines Verdünnungsgrads aus einer zur Kartusche gehörigen elektronischen Speichereinheit verfügt, und wobei die Kontrolleinheit über eine Regeleinheit verfügt, die so konfiguriert ist, dass sie das Konzentrat entsprechend dem Verdünnungsgrad mit dem Verdünnungsmittel verdünnt.

Ein weiterer Gegenstand der vorliegenden Erfindung ist ein System, umfassend
- ein tragbares Sprühgerät, das folgende Komponenten umfasst:
   - einen Behälter zur Aufnahme eines Verdünnungsmittels,
   - einen Auslass,
   - Mittel zur Förderung des Verdünnungsmittels in Richtung Auslass,
   - Mittel zum reversiblen Anschluss einer auswechselbaren Kartusche enthaltend ein Konzentrat eines Pestizids, Insektizids, Herbizids oder Fungizids an das Sprühgerät,
   - Mittel zur Förderung des Konzentrats in Richtung Auslass,
   - eine Kontrolleinheit,
- einen Durchflussmesser zur Ermittlung des Flusses des Verdünnungsmittels in Richtung Auslass, wobei der Durchflussmesser mit der Kontrolleinheit verbunden ist
- und eine auswechselbare Kartusche, die Mittel zum reversiblen Anschluss der Kartusche an das Sprühgerät umfasst,
dadurch gekennzeichnet, dass
- die Kontrolleinheit über Mittel zum Auslesen eines Verdünnungsgrads aus einer zur Kartusche gehörigen elektronischen Speichereinheit verfügt,
- die Kontrolleinheit so konfiguriert ist, dass sie anhand des Flusses des Verdünnungsmittels in Richtung Auslass den Fluss des Konzentrats so regelt, dass eine Mischung des Konzentrats und des Verdünnungsmittels aus dem Auslass austritt, in der das Konzentrat gemäß dem ausgelesenen Verdünnungsgrad verdünnt ist, und
- die Kartusche über eine elektronische Speichereinheit verfügt, die beim Anschluss der Kartusche an das Sprühgerät von der Kontrolleinheit des
Sprühgeräts ausgelesen wird und in der Informationen über einen einzustellenden Verdünnungsgrad des Konzentrats mit dem Verdünnungsmittel gespeichert sind.

Ein weiterer Gegenstand der vorliegenden Erfindung ist ein Verfahren zur Applikation einer Wirkstoffformulierung, umfassend die folgenden Schritte:
- Bereitstellen einer auswechselbaren Kartusche mit einem Wirkstoffkonzentrat, wobei die Kartusche eine elektronische Speichereinheit umfasst, wobei in der Speichereinheit ein Verdünnungsrad gespeichert ist,
- Bereitstellen eines Sprühgeräts mit einem Verdünnungsmittel, wobei das Sprühgerät eine Kontrolleinheit umfasst, wobei die Kontrolleinheit über Mittel verfügt, den Verdünnungsgrad aus der Speichereinheit auszulesen,
- Anschließen der auswechselbaren Kartusche an das Sprühgerät durch einen Benutzer,
- Auslesen des Verdünnungsgrads aus der Speichereinheit durch die Kontrolleinheit,
- Ermitteln des Flusses des Verdünnungsmittels durch den Durchflussmesser, der mit der Kontrolleinheit verbunden ist,
- Regeln des Flusses/der Flüsse des Wirkstoffkonzentrats und/oder des Verdünnungsmittels aus ihren Behältnissen durch die Kontrolleinheit in Richtung Auslass, so dass eine Mischung des Wirkstoffkonzentrats und des Verdünnungsmittels aus dem Auslass austritt, in der das Wirkstoffkonzentrat gemäß dem ausgelesenen Verdünnungsgrad verdünnt ist.

Gemäß der vorliegenden Erfindung liegen Wirkstoffkonzentrat und Verdünnungsmittel in separaten Behältnissen vor. Der Anwender muss die Verdünnung des Wirkstoffkonzentrats jedoch nicht selbst manuell vornehmen. Stattdessen erfolgt die Mischung automatisch während des Sprühvorgangs. Der Anwender muss sich nicht einmal darum kümmern, in welchem Verhältnis das Wirkstoffkonzentrat und das Verdünnungsmittel gemischt werden müssen. Das korrekte Mischungsverhältnis wird durch eine Kontrolleinheit eingestellt, die das einzustellende Mischungsverhältnis von der Konzentrat-Kartusche empfängt, und den Fluss von Verdünnungsmittel und/oder Konzentrat so regelt, dass die Mischung das Sprühgerät im korrekten Mischungsverhältnis über den Auslass verlässt.

Die einzelnen Elemente, die das erfindungsgemäße System, die Kartusche, das Sprühgerät und das Verfahren kennzeichnen, werden nachfolgend näher erläutert. Bei dieser Erläuterung wird nicht zwischen den einzelnen Erfindungsgegenständen (Kartusche, Sprühgerät, System und Verfahren) unterschieden. Stattdessen gelten die nachfolgenden Beschreibungen für alle Erfindungsgegenstände in analoger Weise, unabhängig davon, in welchem Kontext sie stehen.

Ein Gegenstand der vorliegenden Erfindung ist ein tragbares Sprühgerät. Unter tragbar wird verstanden, dass das Gerät von einem Menschen ohne maschinelle Hilfsmittel von einem Ort zu einem anderen Ort transportiert werden kann.

Das Sprühgerät umfasst einen Behälter zur Aufnahme des Verdünnungsmittels. Das Verdünnungsmittel wird verwendet, um es mit dem Konzentrat zu mischen und damit eine Verdünnung des Konzentrats zu erzielen.

Das Verdünnungsmittel ist, so wie das Konzentrat auch, eine Flüssigkeit. Der Begriff "Flüssigkeit" soll auch Lösungen, Emulsionen und Suspensionen erfassen.

In einer bevorzugten Ausführungsform handelt es sich bei dem Verdünnungsmittel um Wasser.

Beim Konzentrat handelt es sich vorzugsweise um ein Wirkstoffkonzentrat. Unter Wirkstoffkonzentrat wird eine Formulierung eines Wirkstoffs verstanden, die in konzentrierter Form vorliegt und vor ihrer Verwendung verdünnt werden muss/sollte. Ein Wirkstoff ist eine Substanz oder ein Substanzgemisch, das eine biologische Wirkung aufweist. Beispiele für Wirkstoffe sind Pestizide, Insektizide, Herbizide und Fungizide. In einer besonders bevorzugten Ausführungsform handelt es sich bei dem Konzentrat um ein Pestizid-Konzentrat.

Der Behälter zur Aufnahme des Verdünnungsmittels kann aus einem beliebigen Material bestehen, das mit dem Verdünnungsmittel kompatibel ist. Der Begriff "kompatibel" bedeutet, dass das Material durch das Verdünnungsmittel nicht chemisch angegriffen werden sollte und dass das Material für das Verdünnungsmittel undurchlässig sein sollte.

Der Behälter kann als Tank ausgeführt sein, der einem Überdruck standhält. Der Überdruck kann eingesetzt werden, um das Verdünnungsmittel aus dem Tank in Richtung Auslass zu befördern.

In einer bevorzugten Ausführungsform wird der Behälter drucklos betrieben. Dadurch, dass der Behälter keinem Überdruck standhalten muss, kann er aus dünnwandigerem und leichterem Material gefertigt werden.

In einer ganz besonders bevorzugten Ausführungsform ist der Behälter als flexibler Beutel ausgeführt. Ein solcher Beutel weist vorzugsweise Gurte auf, damit er wie ein Rucksack auf den Rücken geschnallt und getragen werden kann.

In einer Ausführungsform ist das Sprühgerät so ausgeführt, dass der Benutzer beim Transport einen Teil des Sprühgeräts, der den Behälter umfasst, in der einen Hand trägt, und einen anderen Teil des Sprühgeräts, der den Auslass umfasst, in der anderen. Vorzugsweise ist das Gerät so ausgeführt, dass der Benutzer einen Teil des Sprühgeräts, der den Behälter umfasst, auf dem Rücken tragen und transportieren kann. Ein anderer Teil, der den Auslass umfasst, wird nach wie vor mit einer Hand getragen, aber die zweite Hand ist nun frei. Dazu ist das Gerät mit entsprechenden Gurten ausgestattet.

Das erfindungsgemäße Sprühgerät weist ferner Mittel auf, um das Verdünnungsmittel aus dem Behälter in Richtung Auslass zu befördern. Wie bereits beschrieben, kann das Verdünnungsmittel mittels Druck aus dem Behälter in Richtung Auslass befördert werden. Dieser Druck kann beispielsweise mit einer manuell oder elektrisch betriebenen Luftpumpe oder mit einer Druckpatrone erzeugt werden.

Vorzugsweise wird das Verdünnungsmittel mit einer elektrisch betriebenen Pumpe in Richtung Auslass befördert.

Das erfindungsgemäße Sprühgerät umfasst ferner Mittel zum reversiblen Anschluss einer auswechselbaren Kartusche an das Sprühgerät. Die Kartusche dient der Aufnahme des Konzentrats. Kartusche und Sprühgerät weisen zueinander kompatible Mittel zum Anschließen der Kartusche an das Sprühgerät auf. Ist die Kartusche an das Sprühgerät angeschlossen, so kann das in der Kartusche enthaltene Konzentrat aus der Kartusche durch Teile des Sprühgeräts in Richtung Auslass des Sprühgeräts befördert werden.

Der Anschluss der Kartusche an das Sprühgerät kann beispielsweise über eine Schraub- oder eine Bajonettverbindung erfolgen.

Die Kartusche ist auswechselbar, das heißt, sie kann an das Sprühgerät angeschlossen und wieder entfernt werden. Sie wird vorzugsweise dann wieder entfernt und ggf. durch eine andere oder neue Kartusche ersetzt, wenn sie entleert worden ist.

Die Kartusche ist so ausgeführt, dass sie für das Konzentrat undurchlässig ist und durch das Konzentrat nicht chemisch angegriffen wird.

In einer bevorzugten Ausführungsform ist die Kartusche zumindest teilweise aus Kunststoff ausgeführt. Kunststoffe sind dafür bekannt, dass sie vielen Stoffen gegenüber chemisch inert sind. Sie sind zudem leicht, lassen sich gut verarbeiten und in nahezu beliebige Formen bringen.

In einer bevorzugten Ausführungsform ist die Kartusche als Druckbehälter ausgeführt. Vorzugsweise enthält sie neben dem Konzentrat ein von dem Konzentrat getrenntes, unter Druck stehendes Treibmittel. Die Kartusche weist vorzugsweise ein Ventil auf. Vorzugsweise wird das Ventil automatisch geöffnet, wenn die Kartusche an das Sprühgerät angeschlossen wird. Das unter Druck stehende Treibmittel drückt das Konzentrat aus der Kartusche in das Sprühgerät. Ein weiteres, in dem Sprühgerät befindliches Ventil stoppt den weiteren Fluss des Konzentrats. Dieses weitere Ventil öffnet sich vorzugsweise dann, wenn ein Nutzer einen Applikationsvorgang, üblicherweise durch Betätigen eines Handgriffs, startet.

Die vorzugsweise als Druckbehälter ausgeführte Kartusche kann beispielsweise aus Aluminium oder Weißblech bestehen - Materialien, die druckbeständig sind und beispielsweise in Spraydosen (z.B. Rasierschaum) verwendet werden.

Es ist denkbar, dass die Kartusche einen Beutel mit dem Konzentrat enthält, wobei der Beutel mit dem Ventil verbunden ist (Ventilbeutelsystem). Das Treibmittel umgibt den mit dem Konzentrat befüllten Beutel und übt den notwendigen Druck für das Herausdrücken des Konzentrats aus der Kartusche aus (siehe z.B. DE69820260T2, US5505039, EP0718213A).

Denkbar ist aber auch, dass Treibmittel und das Konzentrat durch einen Kolben voneinander getrennt sind (siehe z.B. DE3934237A1). Das Treibmittel übt einen Druck auf den Kolben auf. Ist das Ventil geöffnet, wird das Konzentrat durch den Kolben aus der Kartusche gedrückt. Denkbar ist beispielsweise die Verwendung eines ZIMA-Kolbens.

Die Kartusche kann als Einwegbehälter oder Mehrwegbehälter ausgeführt sein.

Die Kartusche weist eine elektronische Speichereinheit auf.

Unter der elektronischen Speicherung sind alle Speichermedien zusammengefasst, die Informationen in oder auf Basis von elektronischen (Halbleiter-)Bauelementen speichern. Als Beispielse seien genannt: ROM (read only memory), PROM (programmable read only memory), EPROM (erasable programmable read only memory), EEPROM (electrically erasable programmable read only memory)

Flash-EEPROM (z. B. USB-Speichersticks), FRAM (ferroelectric random access memory), MRAM (Magnetoresistive random access memory) und Phase-change RAM (phase-change random access memory).

In der Speichereinheit ist ein Verdünnungsgrad gespeichert oder es sind Informationen gespeichert, anhand derer ein Verdünnungsgrad ermittelt werden kann. Der Verdünnungsgrad gibt an, in welchem Verhältnis das Konzentrat und ein Verdünnungsmittel (meistens Wasser) miteinander vermischt werden sollen, um eine gewünschte Wirkung zu erzielen.

Das Sprühgerät weist eine Kontrolleinheit auf. Die Kontrolleinheit ist in der Lage, die Informationen zum Verdünnungsgrad aus der Speichereinheit der Kartusche auszulesen. Die Mittel zum Auslesen der Speichereinheit und die Speichereinheit selbst sind entsprechend aufeinander abgestimmt. Es gibt vielfältige Möglichkeiten diese Kommunikation zwischen Kontrolleinheit und Speichereinheit zu realisieren. Einige dieser Möglichkeiten sind nachfolgend beschrieben.

Eine Möglichkeit des Auslesens besteht beispielsweise darin, die Kartusche mit einem RFID-Tag zu versehen. Ein RFID-Tag weist eine elektronische Speichereinheit auf. Die Kontrolleinheit verfügt dementsprechend über Mittel, die elektronische Speichereinheit in dem RFID-Tag auszulesen.

In diesem Fall erfolgt das Auslesen kontaktlos. Neben der genannten Kommunikationsform sind auch andere kontaktlose Kommunikationsarten zwischen elektronischer Speichereinheit und Kontrolleinheit denkbar wie Bluetooth oder Nahfeld-Kommunikation.

Die Kommunikation kann aber auch kontaktbehaftet erfolgen. Es ist beispielsweise denkbar, dass sowohl die Kartusche als auch das Sprühgerät über elektrische oder optische Kontakte verfügen, die beim Anschluss der Kartusche an das Sprühgerät einen elektrischen oder optischen Kontakt zwischen Kartusche und Sprühgerät herstellen, über den die Kontrolleinheit auf die elektronische Speichereinheit der Kartusche zugreifen kann. Neben einem einzustellenden Verdünnungsgrad können weitere Informationen in der Speichereinheit der Kartusche gespeichert sein, wie beispielsweise Art des Wirkstoffs, Chargen-Nummer, Haltbarkeitsdatum und Ähnliches.

Es ist denkbar, dass der Verdünnungsgrad direkt in der Speichereinheit der Kartusche gespeichert ist. Denkbar ist aber auch, dass in der Speichereinheit eine Kennung für die Kartusche und/oder das in der Kartusche enthaltene Konzentrat gespeichert ist. Eine solche Kennung kann beispielsweise eine Identifikationsnummer sein. Die Kontrolleinheit ist in der Lage, die Kennung aus der Speichereinheit auszulesen. Es ist denkbar, dass die Kontrolleinheit über ein Register verfügt, in dem verschiedene Konzentrate zusammen mit einem einzustellenden Verdünnungsgrad und der Kennung hinterlegt sind, so dass die Kontrolleinheit durch das Auslesen der Kennung, den einzustellenden Verdünnungsgrad dem Register entnehmen kann. Es ist aber auch denkbar, dass die Kontrolleinheit über ein mobiles Netzwerk auf eine externe Datenbank zugreifen kann, und anhand der Kennung einen einzustellen Verdünnungsgrad aus der externen Datenbank ermitteln kann.

Das erfindungsgemäße Sprühgerät verfügt über Mittel zur Förderung des Konzentrats aus der Kartusche in Richtung Auslass. Vorzugsweise handelt es sich hierbei um eine elektrisch betriebene Pumpe.

In einer besonders bevorzugten Ausführungsform wird eine Schrittmotor-Dosierpumpe verwendet (siehe z.B.: DE102004047584, WO2012048976, DE102009006203). Durch den Schrittmotorantrieb können auch kleine Mengen des Konzentrats dem Verdünnungsmittel beigemengt werden.

Die Kontrolleinheit ermittelt den erforderlichen oder gewünschten Verdünnungsgrad und regelt den Fluss des Verdünnungsmittels und/oder des Konzentrats entsprechend. Auch hierbei sind verschiedene Varianten denkbar; einige davon sind nachfolgend beschrieben.

Es ist zum Beispiel denkbar, dass das Verdünnungsmittel aus dem Behälter in Richtung Auslass gefördert wird und mittels eines Durchflussmessers der Fluss ermittelt wird. Der Durchflussmesser kann mit der Kontrolleinheit verbunden sein und so konfiguriert sein, dass sie anhand des Flusses des Verdünnungsmittels in Richtung Auslass den Fluss des Konzentrats so regelt, dass sich ein konstantes Mischungsverhältnis zwischen Konzentrat und Verdünnungsmittel einstellt. Während also Verdünnungsmittel fließt, wird der Fluss gemessen und genau so viel Konzentrat dem Verdünnungsmittel zugeführt, dass sich eine Mischung mit dem gewünschten/erforderlichen Mischungsverhältnis (Verdünnungsgrad) ergibt.

Unter "konstantem Mischungsverhältnis" wird verstanden, dass das Mischungsverhältnis über die Sprühdauer innerhalb eines vordefinierten Bereichs liegt.

Denkbar ist natürlich auch die umgekehrte Variante: das Konzentrat wird in Richtung Auslass gefördert, der Fluss wird gemessen und es wird genau so viel Verdünnungsmittel dem Konzentrat zugeführt, dass sich der gewünschte/erforderliche Verdünnungsrad einstellt.

Denkbar ist auch, dass die Flüsse von Verdünnungsmittel und Konzentrat durch Regelungen aufeinander abgestimmt werden, um den gewünschten/erforderlichen Verdünnungsgrad zu erzielen. In einem solchen Fall werden beide Flüsse mittels entsprechender Sensoren erfasst.

In einer bevorzugten Ausführungsform wird das Verdünnungsmittel mit einer ersten elektrischen Pumpe aus dem Behälter in Richtung Auslass gefördert. Der Fluss des Verdünnungsmittels wird mit einem Durchflussmesser erfasst und die Messwerte werden an die Kontrolleinheit übermittelt. Die Kontrolleinheit ist mit einer zweiten elektrischen Pumpe verbunden und regelt den Fluss des Konzentrats in Richtung Auslass so, dass Konzentrat und Verdünnungsmittel als Mischung mit dem gewünschten/erforderlichen Mischungsverhältnis das Sprühgerät über den Auslass verlassen.

Mit einem Durchflussmesser wird die pro Zeiteinheit in Richtung Sprühdüse fließende Flüssigkeitsmenge erfasst. Unter Flüssigkeitsmenge wird je nach verwendetem Messverfahren das Volumen oder die Masse verstanden.

Der Durchflussmesser ist vorzugsweise einer, der üblicherweise in geschlossenen Rohrleitungen eingesetzt wird, wie beispielsweise ein magnetisch-induktiver Durchflussmesser, ein Schwebekörper-Durchflussmesser, ein Ultraschall-Durchflussmesser, ein Coriolis-Massendurchflussmesser, ein kalorimetrischer Durchflussmesser oder ein Vortex-Durchflussmesser. Denkbar ist aber auch die Verwendung einer Messblende oder eine Staudrucksonde.

**In** einer bevorzugten Ausführungsform wird die Durchflussmessung mit Hilfe eines Differenzdrucksensors vorgenommen.

**In** einer weiteren bevorzugten Ausführungsform wird ein Flügelradsensor zur Durchflussmessung eingesetzt. Das Messprinzip beruht darauf, dass ein Flügelrad eine Drehzahl proportional zur Strömungsgeschwindigkeit eines Fluids annimmt, durch das das Flügelrad angetrieben wird. Zur Messung der Drehzahl kann ein Permanentmagnet an das Flügelrad angebracht werden, der sich mit dem Flügelrad mitbewegt. Ein Hall-Sensor, an dem sich der Permanentmagnet vorbeibewegt, kann als Impulszähler verwendet werden. Die pro Zeiteinheit gemessene Anzahl von Impulsen ist proportional zur Drehzahl des Flügelrads und damit zur Strömungsgeschwindigkeit des Fluids.

Details zur Durchflussmessung können beispielsweise dem folgenden Lehrbuch entnommen werden: K.W. Bonfig: Technische Durchflussmessung, Vulkan-Verlag Essen, 3. Auflage, 2002, ISBN 3-8027-2190-X.

Über den Auslass verlassen Wirkstoffkonzentrat und Verdünnungsmittel als Mischung das Sprühgerät.

Es ist denkbar, dass Verdünnungsmittel und Konzentrat unmittelbar vor dem Auslass in einer entsprechenden Zuleitung zusammengeführt werden. Ebenso ist es aber auch denkbar, dass vor dem Auslass eine Mischkammer existiert, in welche Verdünnungsmittel und Konzentrat über zwei separate Zuleitungen eingebracht werden. **In** der Mischkammer kommt es dann zu einer Durchmischung von Verdünnungsmittel und Konzentrat bevor die Mischung dann über den Auslass das Sprühgerät verlässt.

Die Durchmischung von Verdünnungsmittel und Konzentrat kann durch geeignete Maßnahmen gefördert werden, beispielsweise durch statische Mischelemente.

Vorzugsweise ist am Auslass eine Sprühdüse angebracht.

Über die Sprühdüse kann eine gewünschte räumliche Verteilung der applizierten Mischung erreicht werden. Üblicherweise verwandelt die Sprühdüse die Flüssigkeit, die durch sie hindurchtritt, in Tropfen mit einer spezifischen Tropfengrößenverteilung, die unter anderem vom Druck der Flüssigkeit, von der Fließgeschwindigkeit der Flüssigkeit und der Geometrie der Sprühdüse abhängt.

Vorzugsweise ist die Sprühdüse auswechselbar, so dass ein Anwender eine an die Applikation und das Zielobjekt angepasste Sprühdüse mit einer gewünschten Tropfengrößenverteilung und räumlichen Verteilung des Sprühguts auswählen kann.

Die Sprühdüse kann beispielsweise lanzenförmig oder pistolenförmig sein oder eine andere Form aufweisen. Vorzugsweise ist sie so ausgeführt, dass sie vom Benutzer mit einer Hand gehalten und auf das Zielobjekt gerichtet werden kann.

Üblicherweise weist die Sprühdüse einen Handgriff auf, der vom Nutzer betätigt wird, um einen Sprühvorgang zu starten. Üblicherweise wird durch Betätigen des Handgriffs ein Ventil geöffnet, so dass das Verdünnungsmittel und das Konzentrat aus ihren jeweiligen Behältern in Richtung Sprühdüse und durch die Sprühdüse auf das Zielobjekt gefördert werden.

In einer bevorzugten Ausführungsform weisen die auswechselbare Sprühdüse und die Kontrolleinheit Mittel auf, die es der Kontrolleinheit ermöglichen, die Anwesenheit einer Sprühdüse und/oder die Art der anwesenden Sprühdüse zu erkennen. Es ist zum Beispiel denkbar, dass die Kontrolleinheit nur dann die Förderung der Flüssigkeiten aus ihren Behältern in Richtung Sprühdüse einleitet, wenn auch eine Sprühdüse angeschlossen ist. Ist keine Sprühdüse angeschlossen, erfolgt aus z.B. Sicherheitsgründen keine Förderung. Weiterhin ist denkbar, dass die Kontrolleinheit die Parameter zur Förderung der Flüssigkeiten an die Art der vorhandenen Sprühdüse anpasst, um ein optimales Sprühergebnis zu ermöglichen. Es ist denkbar, dass eine Sprühdüse einen Mindestdruck der ankommenden Flüssigkeit benötigt, um eine gewünschte räumliche Verteilung der Sprühflüssigkeit zu erzeugen. Dieser Mindestdruck könnte an der Sprühdüse in einer Weise kodiert sein, die von der Kontrolleinheit gelesen werden kann, so dass der Benutzer derartige Parameter nicht manuell einstellen muss.

Vor der Sprühdüse baut sich üblicherweise ein Druck auf. Es ist denkbar, dass dieser Druck in einem definierten Bereich liegen muss, um ein optimales Sprühergebnis zu erzielen.

In einer bevorzugten Ausführungsform ist daher vor der Sprühdüse ein Drucksensor angebracht, der mit der Kontrolleinheit verbunden ist. Mittels des Drucksensors regelt die Kontrolleinheit den Fluss von Verdünnungsmittel und/oder Konzentrat so, dass sich der Druck stets in einem definierten Bereich bewegt.

Vorzugsweise ist vor dem Auslass ein Ventil angebracht. Dieses Ventil kann manuell oder automatisch geöffnet und geschlossen werden.

Vorzugsweise kann dieses Ventil manuell betätigt werden, so dass der Benutzer die am Auslass angebrachte Sprühdüse auf ein Zielobjekt richten und durch manuelles Öffnen des Ventils den Sprühvorgang starten kann.

Denkbar ist auch, dass das Ventil automatisch geöffnet wird. Denkbar ist zum Beispiel, dass das Sprühgerät über einen Sensor verfügt, der die Lage der Sprühdüse im Raum erkennt und bei einer bestimmten Lage das Ventil automatisch öffnet oder schließt. Denkbar ist zum Beispiel, dass das Ventil geschlossen ist, wenn die Sprühdüse zum Boden gerichtet ist und geöffnet wird, wenn die Sprühdüse in die Waagerechte gehoben wird.

Denkbar ist auch, dass das Ventil automatisch geöffnet wird, wenn sich die Sprühdüse dem Zielobjekt nähert. Dies kann beispielsweise mittels Sensoren oder GPS-gestützt (GPS=Globales Positionsbestimmungssystem) erfolgen.

In einer weiteren bevorzugten Ausführungsform wird die Menge an appliziertem Konzentrat ermittelt und gespeichert. Die Speicherung kann in der Kontrolleinheit des Sprühgeräts und/oder in der Speichereinheit der Kartusche erfolgen. Vorzugsweise wird die Restmenge an Konzentrat, das in der Kartusche verbleibt, ermittelt und gespeichert. Die Speicherung kann wiederum in der Kontrolleinheit des Sprühgeräts und/oder in der Speichereinheit der Kartusche erfolgen.

In einer bevorzugten Ausführungsform gehört ein externes Computersystem zu dem erfindungsgemäßen System. Unter "extern" wird verstanden, dass das Computersystem kein integraler Bestandteil des Sprühgeräts und auch nicht Teil der Kartusche ist. Das Computersystem kann aber eine kommunikative Verbindung zur Kontrolleinheit des Sprühgeräts und/oder der Speichereinheit der Kartusche aufnehmen, um einen Datentransfer vorzunehmen. Daten können vom Computersystem zur Speichereinheit übertragen werden, beispielsweise um Produktdaten, den einzustellenden Verdünnungsgrad für das Konzentrat oder dergleichen zu übertragen. Es ist auch denkbar, dass Daten von der Speichereinheit auf das Computersystem übertragen werden können, beispielsweise über die in der Kartusche enthaltende Restmenge an Konzentrat. Es ist ferner denkbar, dass Daten von der Kontrolleinheit auf das Computersystem übertragen werden, wie beispielsweise Daten über die Menge an appliziertem Konzentrat und/oder die Sprühdauer und/oder den Sprühort und/oder den Nutzer. Genauso ist es denkbar, dass Daten von dem Computersystem auf die Kontrolleinheit übermittelt werden, beispielsweise Daten für einen Sprühauftrag.

Die Erfindung wird nachfolgend anhand von Ausführungsbeispielen näher erläutert, ohne die Erfindung jedoch auf diese Beispiele beschränken zu wollen.

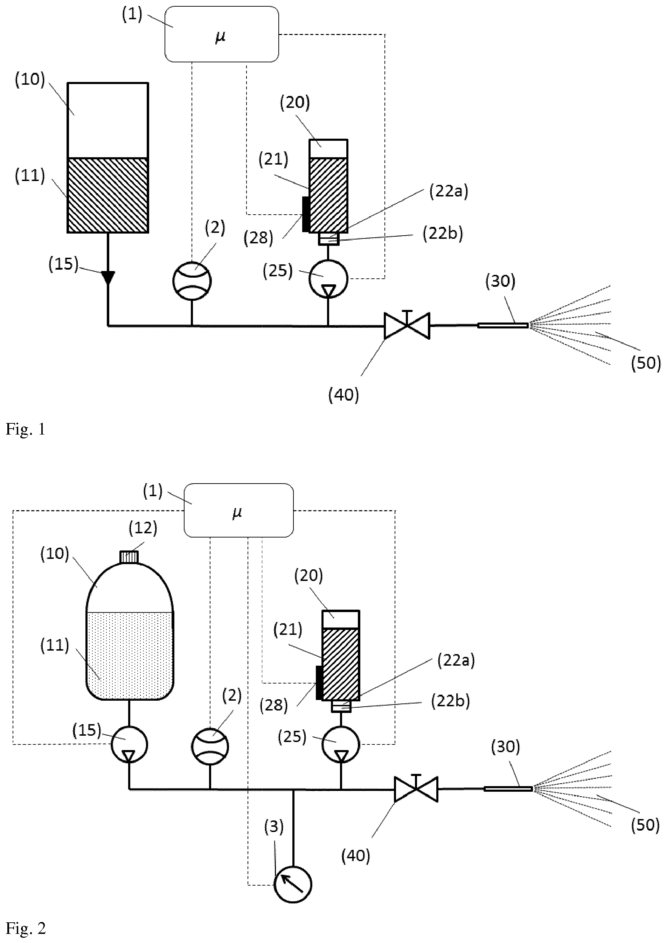

Figur 1 zeigt schematisch eine Ausführungsform des erfindungsgemäßen Systems. Das System umfasst ein erfindungsgemäßes Sprühgerät und eine erfindungsgemäße Kartusche.

Das erfindungsgemäße Sprühgerät umfasst einen Behälter (10) mit einem Verdünnungsmittel (11), einen Auslass (30), Mittel (15) zum Fördern des Verdünnungsmittels (11) aus dem Behälter (10) in Richtung Auslass (30), ein Ventil (40), Mittel (22b) zum Anschließen einer auswechselbaren Kartusche (20), eine elektrisch betriebene Pumpe (25) zum Fördern eines in der Kartusche (20) befindlichen Konzentrats (21) aus der Kartusche (20) in Richtung Auslass (30), einen Durchflussmesser (2) zur Messung des Flusses des Verdünnungsmittels (11) aus dem Behälter (10) in Richtung Auslass (30) und eine Kontrolleinheit (1).

Die Mittel (15) zum Fördern des Verdünnungsmittels (11) aus dem Behälter (10) in Richtung Auslass (30) sind in Figur 1 schematisch als Pfeil dargestellt, der lediglich die Flussrichtung angibt. Der Pfeil bedeutet nicht, dass sich die entsprechenden Mittel an dieser Stelle der Zuleitung befinden müssen.

Der Auslass (30) ist als Sprühdüse ausgeführt. Über die Sprühdüse verlassen das Verdünnungsmittel und das Konzentrat das Sprühgerät in Form einer Mischung (50) mit einem konstanten Mischungsverhältnis.

Die erfindungsgemäße Kartusche (20) beinhaltet das Konzentrat (21). Die Kartusche verfügt über Mittel (22a) zum reversiblen Anschließen der Kartusche (20) an das Sprühgerät. Die erfindungsgemäße Kartusche (20) verfügt ferner über eine Speichereinheit (28). In dieser Speichereinheit (28) ist ein Mischungsverhältnis (Verdünnungsgrad) gespeichert.

Die Kontrolleinheit (1) hat Zugriff auf die Speichereinheit (28) (der Zugriff ist dargestellt durch die gestrichelte Linie) und kann das dort gespeicherte Mischungsverhältnis auslesen.

Die Kontrolleinheit (1) steht zudem in Verbindung mit dem Durchflussmesser (2) und der Pumpe (25). Wird das Ventil (40) (manuell oder automatisch) geöffnet, wird das Verdünnungsmittel (11) aus dem Behälter (10) in Richtung Auslass (30) gefördert. Mittels Durchflussmesser (2) wird der Fluss des Verdünnungsmittels (11) erfasst. Die Kontrolleinheit (1) regelt auf Basis des vom Durchflussmesser (2) gemessenen Flusses die Menge an Konzentrat (21), die mittels Pumpe (25) dem Verdünnungsmittel (11) zugeführt wird, so dass sich das aus der Speichereinheit (28) ausgelesene Mischungsverhältnis einstellt.

Fig. 2 zeigt eine bevorzugte Ausführungsform des erfindungsgemäßen Sprühsystems.

Das erfindungsgemäße Sprühgerät umfasst einen Behälter (10) mit einem Verdünnungsmittel (11), einen Auslass (30), eine erste Pumpe (15) zum Fördern des Verdünnungsmittels (11) aus dem Behälter (10) in Richtung Auslass (30), ein Ventil (40), Mittel (22b) zum Anschließen einer auswechselbaren Kartusche (20), eine zweite Pumpe (25) zum Fördern eines in der Kartusche (20) befindlichen Konzentrats (21) aus der Kartusche (20) in Richtung Auslass (30), einen Durchflussmesser (2) zur Messung des Flusses des Verdünnungsmittels (11) aus dem Behälter (10) in Richtung Auslass (30), einen Drucksensor (3) zur Messung des Drucks in einer Zuleitung zum Auslass (30) und eine Kontrolleinheit (1).

Der Auslass (30) ist als Sprühdüse ausgeführt. Über die Sprühdüse verlassen das Verdünnungsmittel (11) und das Konzentrat (21) das Sprühgerät in Form einer Mischung (50) mit einem konstanten Mischungsverhältnis.

Der Behälter (10) ist als flexibler Beutel ausgeführt. Er umfasst eine Öffnung mit einem wiederverschließbaren Verschluss (12), über die das Verdünnungsmittel (11) in den Beutel gefüllt werden kann.

Die erfindungsgemäße Kartusche (20) beinhaltet das Konzentrat (21). Die Kartusche verfügt über Mittel (22a) zum reversiblen Anschließen der Kartusche (20) an das Sprühgerät. Die erfindungsgemäße Kartusche (20) verfügt ferner über eine Speichereinheit (28). In dieser Speichereinheit (28) ist ein Mischungsverhältnis (Verdünnungsgrad) gespeichert.

Die Kontrolleinheit (1) hat Zugriff auf die Speichereinheit (28) (der Zugriff ist dargestellt durch die gestrichelte Linie) und kann das dort gespeicherte Mischungsverhältnis auslesen.

Die Kontrolleinheit (1) steht zudem in Verbindung mit dem Durchflussmesser (2), der Pumpe (25) und dem Drucksensor (3). Wird das Ventil (40) (manuell oder automatisch) geöffnet, wird das Verdünnungsmittel (11) aus dem Behälter (10) in Richtung Auslass (30) gefördert. Mittels Durchflussmesser (2) wird der Fluss des Verdünnungsmittels (11) erfasst. Die Kontrolleinheit (1) regelt auf Basis des vom Durchflussmesser (2) gemessenen Flusses die Menge an Konzentrat (21), die mittels Pumpe (25) dem Verdünnungsmittel (11) zugeführt wird, so dass sich das aus der Speichereinheit (28) ausgelesene Mischungsverhältnis einstellt.

Mittels des Drucksensors (3) regelt die Kontrolleinheit (1) den Fluss von Verdünnungsmittel und/oder Konzentrat so, dass der Druck in der Zuleitung zur Sprühdüse stets in einem definierten Bereich liegt.

## Patentansprüche

1. Kartusche (20) enthaltend ein Konzentrat (21) eines Pestizids, Insektizids, Herbizids oder Fungizids, wobei die Kartusche (20) Mittel (22a) zum reversiblen Anschluss der Kartusche (20) an ein Sprühgerät umfasst, wobei die Kartusche (20) über eine elektronische Speichereinheit (28) verfügt, **dadurch gekennzeichnet, dass** in der Speichereinheit (28) Informationen über einen einzustellenden Verdünnungsgrad des Konzentrats (21) gespeichert sind.

2. Kartusche nach Anspruch 1, **dadurch gekennzeichnet, dass** die Speichereinheit (28) Teil eines RFID-Tags ist.

3. Kartusche nach einem der Ansprüche 1 oder 2, **dadurch gekennzeichnet, dass** in der Speichereinheit (28) Angaben zur Menge des in der Kartusche (20) enthaltenden Konzentrats (21) enthalten sind.

4. Kartusche nach Anspruch 3, **dadurch gekennzeichnet, dass** in der Speichereinheit (28) die nach einem Sprühvorgang in der Kartusche verbliebene Restmenge gespeichert ist.

5. Sprühgerät zur Applikation eines Pestizids, Insektizids, Herbizids oder Fungizids, umfassend
- einen Behälter (10) zur Aufnahme eines Verdünnungsmittels (11),
- einen Auslass (30),
- Mittel (15) zur Förderung des Verdünnungsmittels (11) in Richtung Auslass (30),
- Mittel (22b) zum reversiblen Anschluss einer auswechselbaren Kartusche enthaltend ein Konzentrat eines Pestizids, Insektizids, Herbizids oder Fungizids an das Sprühgerät,
- Mittel (25) zur Förderung des Konzentrats in Richtung Auslass (30),
- eine Kontrolleinheit (1) und
- einen Durchflussmesser zur Ermittlung des Flusses des Verdünnungsmittels in Richtung Auslass, wobei der Durchflussmesser mit der Kontrolleinheit verbunden ist, **dadurch gekennzeichnet, dass**
- die Kontrolleinheit (1) über Mittel zum Auslesen eines Verdünnungsgrads aus einer zur Kartusche (20) gehörigen elektronischen Speichereinheit (28) verfügt, und
- die Kontrolleinheit (1) so konfiguriert ist, dass sie anhand des Flusses des Verdünnungsmittels (11) in Richtung Auslass den Fluss des Konzentrats (21) so regelt, dass eine Mischung des Konzentrats (21) und des Verdünnungsmittels (11) aus dem Auslass austritt, in der das Konzentrat (21) gemäß dem ausgelesenen Verdünnungsgrad verdünnt ist.

6. Sprühgerät nach Anspruch 5, **dadurch gekennzeichnet, dass** der Behälter (10) als flexibler Beutel ausgeführt ist, und dass das Verdünnungsmittel (11) Wasser ist und dass die Mittel (15) zur Förderung des Wassers in Richtung Auslass (30) eine erste elektrisch betriebene Pumpe umfassen, und dass die Mittel (25) zur Förderung des Konzentrats in Richtung Auslass (30) eine zweite elektrisch betriebene Pumpe umfassen.

7. Sprühgerät nach einem der Ansprüche 5 oder 6, **dadurch gekennzeichnet, dass** der Auslass (30) eine auswechselbare Sprühdüse umfasst, die vorzugsweise in einer kommunikativen Verbindung mit der Kontrolleinheit (1) steht.

8. System, umfassend
- ein tragbares Sprühgerät zur Applikation eines Pestizids, Insektizids, Herbizids oder Fungizids, das folgende Komponenten umfasst:
- einen Behälter (10) zur Aufnahme eines Verdünnungsmittels (11),
- einen Auslass (30),
- Mittel (15) zur Förderung des Verdünnungsmittels (11) in Richtung Auslass (30),
- Mittel (22b) zum reversiblen Anschluss einer auswechselbaren Kartusche (20) enthaltend ein Konzentrat (21) eines Pestizids, Insektizids, Herbizids oder Fungizids an das Sprühgerät,
- Mittel (25) zur Förderung des Konzentrats (21) in Richtung Auslass (30),
- eine Kontrolleinheit (1),
- einen Durchflussmesser zur Ermittlung des Flusses des Verdünnungsmittels in Richtung Auslass, wobei der Durchflussmesser mit der Kontrolleinheit verbunden ist,
- und eine auswechselbare Kartusche (20), die Mittel (22a) zum reversiblen Anschluss der Kartusche (20) an das Sprühgerät umfasst,
**dadurch gekennzeichnet, dass**
die Kontrolleinheit (1) über Mittel zum Auslesen eines Verdünnungsgrads aus einer zur Kartusche gehörigen elektronischen Speichereinheit verfügt,
die Kontrolleinheit (1) so konfiguriert ist, dass sie anhand des Flusses des Verdünnungsmittels (11) in Richtung Auslass den Fluss des Konzentrats (21) so regelt, dass eine Mischung des Konzentrats (21) und des Verdünnungsmittels (11) aus dem Auslass austritt, in der das Konzentrat (21) gemäß dem ausgelesenen Verdünnungsgrad verdünnt ist, und
die Kartusche (20) über eine elektronische Speichereinheit (28) verfügt, die beim Anschluss der Kartusche (20) an das Sprühgerät von der Kontrolleinheit (1) des Sprühgeräts ausgelesen wird und in der Informationen über einen einzustellenden Verdünnungsgrad des Konzentrats (21) mit dem Verdünnungsmittel (11) gespeichert sind.

9. System nach Anspruch 8, das eine Kartusche (20) nach einem der Ansprüche 1 bis 4 und ein Sprühgerät nach einem der Ansprüche 5 bis 7 umfasst.

10. System nach einem der Ansprüche 8 oder 9, umfassend ein externes Computersystem, das mit der Kontrolleinheit (1) des Sprühgeräts und/oder mit der Speichereinheit (28) der Kartusche (20) in einer kommunikativen Verbindung stehen kann, wobei Daten von dem Computersystem an die Kontrolleinheit (1) und/oder die Speichereinheit (28) übertragen werden können und/oder Daten von der Kontrolleinheit (1) und/oder der Speichereinheit (28) an das externe Computersystem übertragen werden können.

11. Verfahren zur Applikation einer Wirkstoffformulierung, umfassend die folgenden Schritte:
- Bereitstellen einer auswechselbaren Kartusche (20) mit einem Wirkstoffkonzentrat (21), wobei die Kartusche (20) eine elektronische Speichereinheit (28) umfasst, wobei in der Speichereinheit (28) ein Verdünnungsrad gespeichert ist, wobei es sich bei dem Wirkstoffkonzentrat (21) um ein Konzentrat eines Pestizids, Insektizids, Herbizids oder Fungizids handelt,
- Bereitstellen eines Sprühgeräts zur Applikation eines Pestizids, Insektizids, Herbizids oder Fungizids umfassend ein Verdünnungsmittel (11), wobei das Sprühgerät eine Kontrolleinhei (1) umfasst, wobei die Kontrolleinheit (1) über Mittel verfügt, den Verdünnungsgrad aus der Speichereinheit (28) auszulesen,
- Anschließen der auswechselbaren Kartusche (20) an das Sprühgerät durch einen Benutzer,
- Auslesen des Verdünnungsgrads aus der Speichereinheit (28) durch die Kontrolleinheit (1),
- Ermitteln des Flusses des Verdünnungsmittels (11) durch den Durchflussmesser, der mit der Kontrolleinheit (1) verbunden ist,
- Regeln des Flusses/der Flüsse des Wirkstoffkonzentrats (21) und/oder des Verdünnungsmittels (11) aus ihren Behältnissen durch die Kontrolleinheit (1) in Richtung Auslass, so dass eine Mischung des Wirkstoffkonzentrats (21) und des Verdünnungsmittels (11) aus dem Auslass austritt, in der das Wirkstoffkonzentrat (21) gemäß dem ausgelesenen Verdünnungsgrad verdünnt ist.

12. Verfahren nach Anspruch 11 unter Verwendung eines Sprühgeräts nach einem der Ansprüche 5 bis 7 und/oder unter Verwendung einer Kartusche (20) nach einem der Ansprüche 1 bis 4.

13. Verfahren nach Anspruch 11 unter Verwendung eines Sprühsystems nach einem der Ansprüche 8 bis 10.

## Claims

1. Cartridge (20) containing a concentrate (21) of a pesticide, insecticide, herbicide or fungicide, wherein the cartridge (20) comprises means (22a) for the reversible connection of the cartridge (20) to a spraying device, wherein the cartridge (20) has an electronic storage unit (28), **characterized in that** information about a dilution ratio of the concentrate (21) to be set is stored in the storage unit (28).

2. Cartridge according to claim 1, **characterized in that** the storage unit (28) is part of an RFID tag.

3. Cartridge according to any one of claims 1 or 2, **characterized in that** the storage unit (28) contains data regarding the quantity of the concentrate (21) contained in the cartridge (20).

4. Cartridge according to claim 3, **characterized in that** the residual quantity remaining in the cartridge after a spraying operation is stored in the storage unit (28).

5. Spraying device for applying a pesticide, insecticide, herbicide or fungicide, comprising
- a container (10) for receiving a diluent (11),
- an outlet (30),
- means (15) for conveying the diluent (11) in the direction of the outlet (30),
- means (22b) for the reversible connection of an exchangeable cartridge containing a concentrate of a pesticide, insecticide, herbicide or fungicide to the spraying device,
- means (25) for conveying the concentrate in the direction of the outlet (30),
- a control unit (1), and
- a flow meter for determining the flow of the diluent in the direction of the outlet, wherein the flow meter is connected to the control unit, **characterized in that**
- the control unit (1) has means for reading out a dilution ratio from an electronic storage unit (28) belonging to the cartridge (20), and
- the control unit (1) is configured such that, based on the flow of the diluent (11) in the direction of the outlet, it regulates the flow of the concentrate (21) such that a mixture of the concentrate (21) and the diluent (11) emerges from the outlet, in which the concentrate (21) is diluted in accordance with the read-out dilution ratio.

6. Spraying device according to claim 5, **characterized in that** the container (10) is designed as a flexible bag, and **in that** the diluent (11) is water, and **in that** the means (15) for conveying the water in the direction of the outlet (30) comprise a first electrically operated pump, and **in that** the means (25) for conveying the concentrate in the direction of the outlet (30) comprise a second electrically operated pump.

7. Spraying device according to any one of claims 5 or 6, **characterized in that** the outlet (30) comprises an exchangeable spray nozzle, which is preferably in communicative connection with the control unit (1).

8. System, comprising
- a portable spraying device for applying a pesticide, insecticide, herbicide or fungicide, comprising the following components:
- a container (10) for receiving a diluent (11),
- an outlet (30),
- means (15) for conveying the diluent (11) in the direction of the outlet (30),
- means (22b) for the reversible connection of an exchangeable cartridge (20) containing a concentrate (21) of a pesticide, insecticide, herbicide or fungicide to the spraying device,
- means (25) for conveying the concentrate (21) in the direction of the outlet (30),
- a control unit (1),
- a flow meter for determining the flow of the diluent in the direction of the outlet, wherein the flow meter is connected to the control unit,
- and an exchangeable cartridge (20) comprising means (22a) for the reversible connection of the cartridge (20) to the spraying device, **characterized in that** the control unit (1) has means for reading out a dilution ratio from an electronic storage unit belonging to the cartridge, the control unit (1) is configured such that, based on the flow of the diluent (11) in the direction of the outlet, it regulates the flow of the concentrate (21) such that a mixture of the concentrate (21) and the diluent (11) emerges from the outlet, in which the concentrate (21) is diluted in accordance with the read-out dilution ratio, and the cartridge (20) has an electronic storage unit (28) which, upon connection of the cartridge (20) to the spraying device, is read out by the control unit (1) of the spraying device and in which information about a dilution ratio of the concentrate (21) with the diluent (11) to be set is stored.

9. System according to claim 8, comprising a cartridge (20) according to any one of claims 1 to 4 and a spraying device according to any one of claims 5 to 7.

10. System according to any one of claims 8 or 9, comprising an external computer system which can be in communicative connection with the control unit (1) of the spraying device and/or with the storage unit (28) of the cartridge (20), wherein data can be transmitted from the computer system to the control unit (1) and/or the storage unit (28) and/or data can be transmitted from the control unit (1) and/or the storage unit (28) to the external computer system.

11. Method for applying an active ingredient formulation, comprising the following steps:
- providing an exchangeable cartridge (20) with an active ingredient concentrate (21), wherein the cartridge (20) comprises an electronic storage unit (28), wherein a dilution ratio is stored in the storage unit (28), wherein the active ingredient concentrate (21) is a concentrate of a pesticide, insecticide, herbicide or fungicide,
- providing a spraying device for applying a pesticide, insecticide, herbicide or fungicide comprising a diluent (11), wherein the spraying device comprises a control unit (1), wherein the control unit (1) has means for reading out the dilution ratio from the storage unit (28),
- connecting the exchangeable cartridge (20) to the spraying device by a user,
- reading out the dilution ratio from the storage unit (28) by the control unit (1),
- determining the flow of the diluent (11) by the flow meter connected to the control unit (1),
- regulating the flow/flows of the active ingredient concentrate (21) and/or the diluent (11) from their containers by the control unit (1) in the direction of the outlet, such that a mixture of the active ingredient concentrate (21) and the diluent (11) emerges from the outlet, in which the active ingredient concentrate (21) is diluted in accordance with the read-out dilution ratio.

12. Method according to claim 11 using a spraying device according to any one of claims 5 to 7 and/or using a cartridge (20) according to any one of claims 1 to 4.

13. Method according to claim 11 using a spraying system according to any one of claims 8 to 10.

## Revendications

1. Cartouche (20) contenant un concentré (21) d'un pesticide, d'un insecticide, d'un herbicide ou d'un fongicide, la cartouche (20) comprenant des moyens (22a) pour le raccordement réversible de la cartouche (20) à un pulvérisateur, la cartouche (20) disposant d'une unité de mémoire électronique (28), **caractérisée en ce que** des informations concernant un degré de dilution à régler pour le concentré de substance active (21) contenu dans la cartouche sont mémorisées dans l'unité de mémoire (28).

2. Cartouche selon la revendication 1, **caractérisée en ce que** l'unité de mémoire (28) fait partie d'une étiquette RFID.

3. Cartouche selon l'une quelconque des revendications 1 ou 2, **caractérisée en ce que** l'unité de mémoire (28) contient des indications concernant la quantité de concentré (21) contenu dans la cartouche (20).

4. Cartouche selon la revendication 3, **caractérisée en ce que** la quantité résiduelle restée dans la cartouche après un processus de pulvérisation est mémorisée dans l'unité de mémoire (28).

5. Pulvérisateur pour l'application d'un pesticide, d'un insecticide, d'un herbicide ou d'un fongicide, comprenant
- un réservoir (10) pour recevoir un diluant (11),
- une sortie (30),
- des moyens (15) pour transporter le diluant (11) en direction de la sortie (30),
- des moyens (22b) pour le raccordement réversible d'une cartouche interchangeable contenant un concentré d'un pesticide, d'un insecticide, d'un herbicide ou d'un fongicide au pulvérisateur,
- des moyens (25) pour transporter le concentré en direction de la sortie (30), et
- une unité de contrôle (1) et
- un débitmètre pour déterminer le débit du diluant en direction de la sortie, le débitmètre étant relié à l'unité de contrôle, **caractérisé en ce que**
- l'unité de contrôle (1) dispose de moyens pour lire un degré de dilution à partir d'une unité de mémoire électronique (28) associée à la cartouche (20), et
- l'unité de contrôle (1) est configurée de telle sorte qu'elle régule le débit du concentré (21) sur la base du débit du diluant (11) en direction de la sortie de telle sorte qu'un mélange du concentré (21) et du diluant (11) sorte de la sortie, dans lequel le concentré (21) est dilué conformément au degré de dilution lu.

6. Pulvérisateur selon la revendication 5, **caractérisé en ce que** le réservoir (10) est réalisé sous la forme d'un sac flexible, et **en ce que** le diluant (11) est de l'eau, et **en ce que** les moyens (15) pour transporter l'eau en direction de la sortie (30) comprennent une première pompe électrique, et **en ce que** les moyens (25) pour transporter le concentré en direction de la sortie (30) comprennent une deuxième pompe électrique.

7. Pulvérisateur selon l'une quelconque des revendications 5 ou 6, **caractérisé en ce que** la sortie (30) comprend une buse de pulvérisation interchangeable, qui est de préférence en liaison de communication avec l'unité de contrôle (1).

8. Système, comprenant
- un pulvérisateur portable pour l'application d'un pesticide, d'un insecticide, d'un herbicide ou d'un fongicide, le pulvérisateur comprenant les composants suivants :
- un réservoir (10) pour recevoir un diluant (11),
- une sortie (30),
- des moyens (15) pour transporter le diluant (11) en direction de la sortie (30),
- des moyens (22b) pour le raccordement réversible d'une cartouche interchangeable (20) contenant un concentré (21) d'un pesticide, d'un insecticide, d'un herbicide ou d'un fongicide au pulvérisateur,
- des moyens (25) pour transporter le concentré (21) en direction de la sortie (30),
- une unité de contrôle (1),
- un débitmètre pour déterminer le débit du diluant en direction de la sortie, le débitmètre étant relié à l'unité de contrôle,
- et une cartouche interchangeable (20) comprenant des moyens (22a) pour le raccordement réversible de la cartouche (20) au pulvérisateur, **caractérisé en ce que** l'unité de contrôle (1) dispose de moyens pour lire un degré de dilution à partir d'une unité de mémoire électronique associée à la cartouche, l'unité de contrôle (1) est configurée de telle sorte qu'elle régule le débit du concentré (21) sur la base du débit du diluant (11) en direction de la sortie de telle sorte qu'un mélange du concentré (21) et du diluant (11) sorte de la sortie, dans lequel le concentré (21) est dilué conformément au degré de dilution lu, et la cartouche (20) dispose d'une unité de mémoire électronique (28) qui, lors du raccordement de la cartouche (20) au pulvérisateur, est lue par l'unité de contrôle (1) du pulvérisateur et dans laquelle des informations concernant un degré de dilution du concentré (21) avec le diluant (11) à régler sont mémorisées.

9. Système selon la revendication 8, comprenant une cartouche (20) selon l'une quelconque des revendications 1 à 4 et un pulvérisateur selon l'une quelconque des revendications 5 à 7.

10. Système selon l'une quelconque des revendications 8 ou 9, comprenant un système informatique externe qui peut être en liaison de communication avec l'unité de contrôle (1) du pulvérisateur et/ou avec l'unité de mémoire (28) de la cartouche (20), des données pouvant être transmises du système informatique à l'unité de contrôle (1) et/ou à l'unité de mémoire (28) et/ou des données pouvant être transmises de l'unité de contrôle (1) et/ou de l'unité de mémoire (28) au système informatique externe.

11. Procédé pour l'application d'une formulation de substance active, comprenant les étapes suivantes :
- fournir une cartouche interchangeable (20) avec un concentré de substance active (21), la cartouche (20) comprenant une unité de mémoire électronique (28), un degré de dilution étant mémorisé dans l'unité de mémoire (28), le concentré de substance active (21) étant un concentré d'un pesticide, d'un insecticide, d'un herbicide ou d'un fongicide,
- fournir un pulvérisateur avec un diluant (11), le pulvérisateur comprenant une unité de contrôle (1), l'unité de contrôle (1) disposant de moyens pour lire le degré de dilution à partir de l'unité de mémoire (28),
- raccorder la cartouche interchangeable (20) au pulvérisateur par un utilisateur,
- lire le degré de dilution à partir de l'unité de mémoire (28) par l'unité de contrôle (1),
- déterminer le débit du diluant (11) par le débitmètre relié à l'unité de contrôle (1),
- réguler le débit/les débits du concentré de substance active (21) et/ou du diluant (11) à partir de leurs réservoirs par l'unité de contrôle (1) en direction de la sortie, de sorte qu'un mélange du concentré de substance active (21) et du diluant (11) sorte de la sortie, dans lequel le concentré de substance active (21) est dilué conformément au degré de dilution lu.

12. Procédé selon la revendication 11 en utilisant un pulvérisateur selon l'une quelconque des revendications 5 à 7 et/ou en utilisant une cartouche (20) selon l'une quelconque des revendications 1 à 4.

13. Procédé selon la revendication 11 en utilisant un système de pulvérisation selon l'une quelconque des revendications 8 à 10.
